(19) Europäisches Patentamt

European Patent Office

Office européen des brevets

(11) Veröffentlichungsnummer : **0 400 002 B1**

# (12) EUROPÄISCHE PATENTSCHRIFT

(45) Veröffentlichungstag der Patentschrift :
**14.08.91 Patentblatt 91/33**

(21) Anmeldenummer : **88905354.2**

(22) Anmeldetag : **23.06.88**

(86) Internationale Anmeldenummer :
**PCT/DE88/00372**

(87) Internationale Veröffentlichungsnummer :
**WO 89/04779 01.06.89 Gazette 89/12**

�milnt. Cl.⁵ : **B60R 21/32**

(54) VERFAHREN ZUM BETRIEB EINER SICHERHEITSEINRICHTUNG FÜR FAHRZEUGINSASSEN.

(30) Priorität : **16.11.87 DE 3738862**

(43) Veröffentlichungstag der Anmeldung :
**05.12.90 Patentblatt 90/49**

(45) Bekanntmachung des Hinweises auf die
Patenterteilung :
**14.08.91 Patentblatt 91/33**

(84) Benannte Vertragsstaaten :
**DE FR GB IT SE**

(56) Entgegenhaltungen :
**DE-A- 2 021 475**
**FR-A- 2 267 221**
**US-A- 3 767 228**

(73) Patentinhaber : **ROBERT BOSCH GmbH**
**Postfach 10 60 50**
**W-7000 Stuttgart 10 (DE)**

(72) Erfinder : **BURGER, Wilfried**
**Bahnhofstrasse 97**
**W-7254 Hemmingen (DE)**
Erfinder : **NITSCHKE, Werner**
**Roseggerweg 14**
**W-7257 Ditzingen (DE)**
Erfinder : **TAUFER, Peter**
**Talstrasse 45**
**W-7253 Renningen 2 (DE)**
Erfinder : **WELLER, Hugo**
**Mörikestrasse 5**
**W-7141 Oberriexingen (DE)**

EP 0 400 002 B1

## Beschreibung

### Stand der Technik

Die Erfindung geht aus von einem Verfahren zum Betrieb einer Sicherheitseinrichtung für Fahrzeuginsassen nach der Gattung des Hauptanspruches. Bei einer aus DE-A-2851333 bekannten Sicherheitseinrichtung ist aus Sicherheitsgründen eine Speichereinrichtung für elektrische Energie vorgesehen, um die Sicherheitseinrichtung mittels elektrisch betätigbarer Auslösemittel auch dann noch betätigen zu können, wenn beispielsweise die Verbindung zur Hauptenergiequelle des Fahrzeugs, also der Fahrzeugbatterie, unterbrochen ist. Als elektrisch betätigbares Auslösemittel werden in Sicherheitseinrichtungen häufig sogenannte Zündpillen verwendet, die bei Stromdurchfluß elektrisch erhitzt werden und dadurch eine pyrotechnische Reaktion in Gang setzen. Derartige Zündpillen neigen jedoch nach der Zündung zu Nebenschlüssen, die die begrenzte Energiereserve der Speichereinrichtung beanspruchen. Aufgrund der unerwünschten Entladung der Speichereinrichtung reicht die dann noch zur Verfügung stehende Energiemenge häufig nicht mehr aus, um weitere, für zeitlich aufeinanderfolgende Auslösung bestimmte Auslösemittel auch anderer Rückhaltemittel noch zu betätigen.

In der älteren Patentanmeldung DE-A-3729785 wird daher weiter vorgeschlagen, nach Betätigung jedes Auslösemittels die dem Auslösemittel zugeführte Energie zu messen und nach Erreichen eines festlegbaren Energiegrenzwertes die Energiezufuhr zu dem zuvor betätigten Auslösemittel zu unterbrechen. Wenn jedoch nun die Speichereinrichtung für elektrische Energie defekt ist, so kann es dazu kommen, daß die Auswerteeinrichtung der Sicherheitseinrichtung die aus der Speichereinrichtung abgeschlossene Energie fehlerhaft ermittelt und den Zündvorgang beendet, bevor die zur Zündung notwendige Energie aufgebracht worden ist.

### Vorteile der Erfindung

Die erfindungsgemäße Lösung mit den kennzeichnenden Merkmalen des Hauptanspruches hat den Vorteil, daß die Sicherheitseinrichtung für Fahrzeuginsassen auch dann zuverlässig arbeitet, wenn ein Defekt der Speichereinrichtung festgestellt wird. Trotz eines Defektes der Speichereinrichtung wird nämlich sichergestellt, daß die Auslösemittel die für ihre Aktivierung notwendige Energie erhalten, indem die Auslösemittel für eine vorgebbare Zeitdauer mit der Fahrzeugbatterie verbunden werden.

Durch die in den Unteransprüchen aufgeführten Maßnahmen sind vorteilhafte Weiterbildungen und Ausgestaltungen des im Hauptanspruchs angegebenen Verfahrens möglich. Weiter werden in den Unteransprüchen zur Durchführung des Verfahrens besonders geeignete Einrichtungen beschrieben.

### Zeichnung

Ausführungsbeispiele der Erfindung sind in der Zeichnung dargestellt und in der nachfolgenden Beschreibung näher erläutert. Es zeigen Figur 1 ein Ablaufdiagramm mit Darstellung der einzelnen Verfahrensschritte, Figur 2 ein Blockschaltbild einer Sicherheitseinrichtung für fahrzeuginsassen zur Durchführung des erfindungsgemäßen Verfahrens, figur 3 in einem Diagramm die Darstellung der an der Speichereinrichtung anliegenden Spannung als funktion der Zeit bei intakter Speichereinrichtung, figur 4 ein Spannungsdiagramm als funktion der Zeit zur Erläuterung der funktion der die Auslösemittel aktivierenden Schaltelemente im fall einer defekten Speichereinrichtung.

### Beschreibung des Ausführungsbeispiels

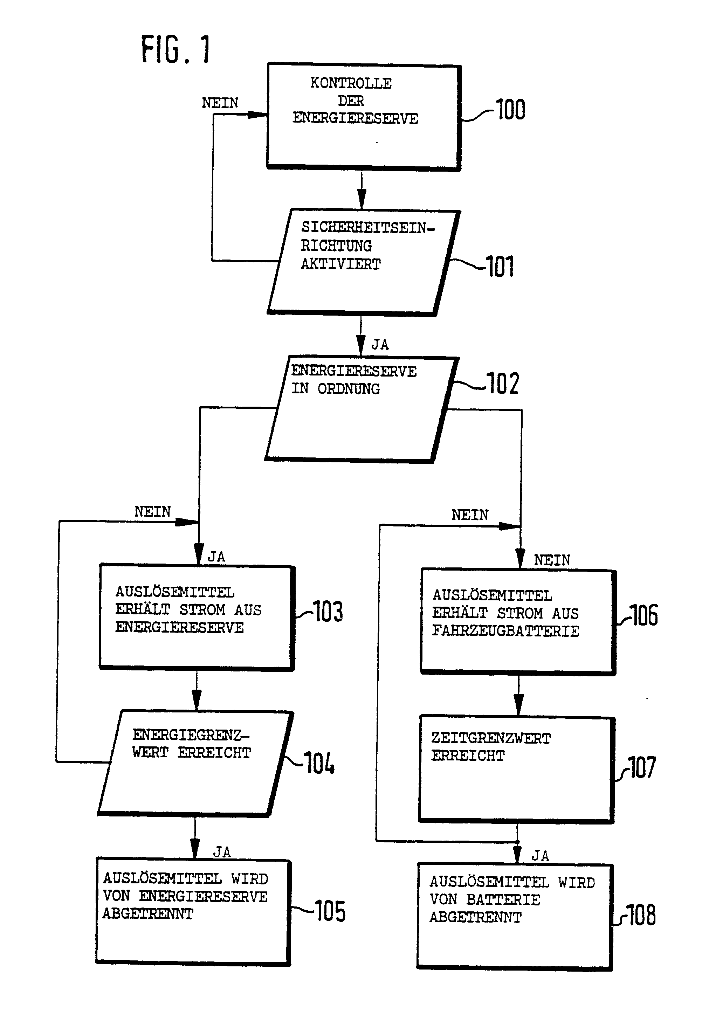

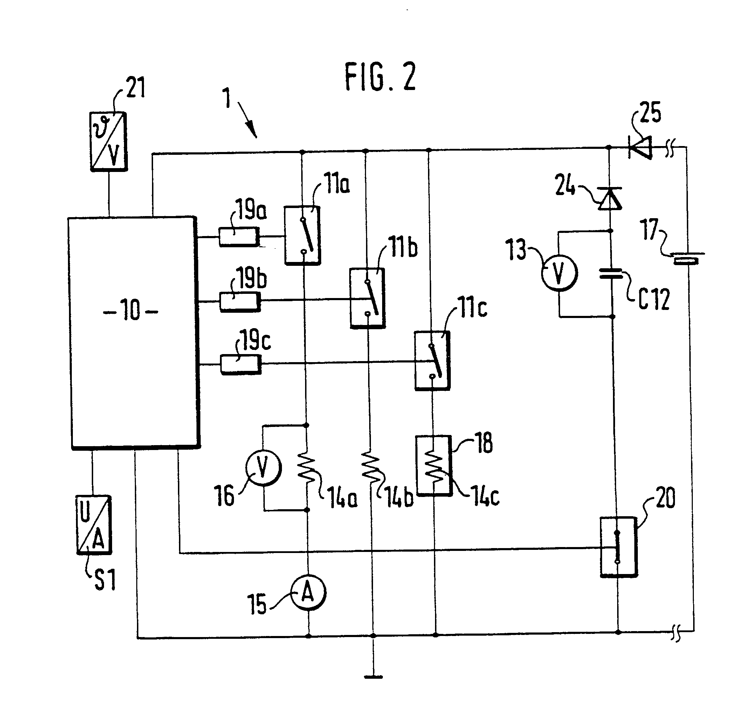

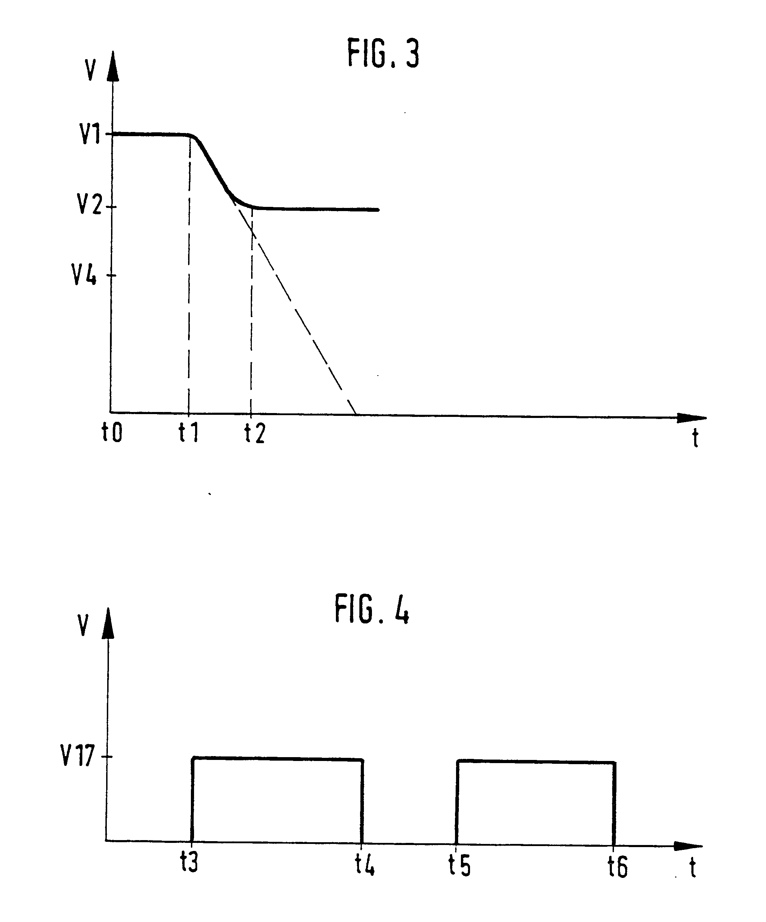

Eine Sicherheitseinrichtung 1 für fahrzeuginsassen (Figur 2) besteht aus einem Beschleunigungsaufnehmer S1, an dessen Ausgang entweder ein beschleunigungsproportionales Signal erzeugt wird oder ein Signal, das erst bei Überschreiten einer festlegbaren Beschleunigungsschwelle entsteht. Dieses Signal wird einer Auswerteeinrichtung 10 zugeführt, in der das vom Beschleunigungsaufnehmer S1 abgegebene Signal daraufhin untersucht wird, ob eine Unfallsituation vorliegt. Mit der Auswerteeinrichtung 10 verbunden und von dieser betätigbar sind Schaltelemente 11a, 11b, 11c, über die mit den vorgenannten Schaltelementen in Serie geschaltete Auslöseelemente mit dem positiven Anschluß einer Betriebsspannungsquelle 17, nämlich der fahrzeugbatterie, verbindbar sind. Parallel zur Betriebsspannungsquelle 17 ist weiter eine Speichereinrichtung C12 für elektrische Energie geschaltet, die mittels eines Schaltelementes 20 oder alternativ durch Dioden D24, D25 von dieser Betriebsspannungsquelle 17 abtrennbar ist. Zwischen die Schaltelemente 11a, 11b und 11c und die Auswerteeinrichtung 10 sind Zeitglieder 19a, 19b, 19c eingeschaltet, die, gesteuert von der Auswerteeinrichtung 10, bestimmen, wie lange die Schaltelemente 11a, 11b, 11c geschlossen bleiben. Die Zeitglieder 19a, 19b, 19c können auch Bestandteil der Auswerteeinrichtung 10 selbst sein. Weiter mit der Auswerteeinrichtung 10 verbunden ist ein Temperatursensor 21, der die Umgebungstemperatur erfaßt und diese bespielsweise in eine temperaturproportionale Spannung umsetzt. Die elektrisch betätigbaren Auslöseelemente 14a, 14b, 14c sind jeweils Rückhaltmitteln 18 zugeordnet. Bei den Rückhaltemitteln 18 handelt es sich um einen Luftsack, Gurtstraffer oder dergleichen. Bei Betätigung eines Schaltelementes 11a, 11b, 11c durch die Auswerteeinrichtung 10 wird ein Stromkreis geschlossen, dessen Bestandteil mindestens eines der Auslösemittel 14a, 14b, 14c ist. Bei diesen Auslösemitteln handelt es sich vorzugsweise um sogenannte Zündpillen, die z.B. bei Stromdurchfluß stark erhitzt werden und dadurch die Zündung einer pyrotechnischen Zündkette einleiten. Mittels der pyrotechnischen Zündkette wird schließlich auf pyrotechnischem Weg ein Gas erzeugt, das z.B. den Luftsack in sehr kurzer Zeit aufbläst. Aus Sicherheitsgründen ist neben der Betriebsspannungsquelle 17, nämlich der Fahrzeugbatterie, eine von dieser Betriebsspannungsquelle unabhängige Speichereinrichtung C12 vorgesehen, in der eine elektrische Energiereserve zur Betätigung der Auslösemittel 14a, 14b, 14c für den Fall gespeichert wird, daß beispielsweise in Folge eines Unfalls die Verbindung der Sicherheitseinrichtung 1 zur Betriebsspannungsquelle 17 unterbrochen wird. Als Speichereinrichtung C12 wird in herkömmlichen Sicherheitseinrichtungen ein Kondensator verwendet, dessen Kapazitätswert jedoch begrenzt ist, da aus Platzgründen kein beliebig großes Bauvolumen zur Verfügung steht. In der Speichereinrichtung C12 ist daher nur eine begrenzte Energiemenge speicherbar. Bei herkömmlichen Sicherheitseinrichtungen mit Zündpillen als Auslösemittel hat es sich nun als nachteilig herausgestellt, daß die Zündpillen zu Nebenschlüssen neigen, d.h., trotz der Aktivierung der Zündpille durch Stromerwärmung, die in der Regel eine Zerstörung der Zündpille und damit eine Unterbrechung des die Zündpille aktivierenden Stromkreises zur Folge hat, kann ein vergleichsweise geringer Restwiderstand erhalten bleiben, der einen geschlossenen Stromkreis aufrechterhält und damit zu einem unerwünschten Abfluß von Energie aus der Speichereinrichtung C12 führt. Dies ist insbesondere dann außerordentlich nachteilig und für die Betriebssicherheit der Sicherheitseinrichtung abträglich, wenn in einem zeitlichen Abstand nacheinander mehrere Zündpillen aktiviert werden sollen, die einzeln mehreren Rückhaltemitteln zugeordnet sind. Ein bestehender Nebenschluß einer zeitlich zuvor aktivierten Zündpille verbraucht in unerwünschter Weise die in der Speichereinrichtung C12 abgespeicherte Energie, so daß keine ausreichende Energiemenge für die nachfolgende Aktivierung weiterer Zündpillen zur Verfügung steht. Gemäß der in der älteren Patentanmeldung P3729785.6 vorgeschlagenen Lösung könnte dieses Problem dadurch gemeistert werden, daß nach Betätigung jedes Auslösemittels die dem Auslösemittel zugeführte Energie gemessen und daß nach Erreichen eines festlegbaren Energiegrenzwertes die Energiezufuhr zu den jeweils betätigten Auslösemitteln unterbrochen wird. Dies funktioniert allerdings zufriedenstellend nur, solange sich die Speichereinrichtung in einem einwandfreien Zustand befindet. Im normalen Betriebszustand ist die Speichereinrichtung nämlich, beispielsweise durch einen zwischengeschalteten Spannungswandler, auf ein höheres Potential aufgeladen als die Betriebsspannungsquelle 17. Bei der Aktivierung eines Auslösemittels wird daher zuerst aus der Speichereinrichtung Energie entnommen. Wenn nun im Verlauf des oder der Aktivierungsvorgänge das Potential der Speichereinrichtung unter das der Betriebsspannungsquelle 17 sinkt, liefert letztere die für die Aktivierung der Auslösemittel erforderliche Energie. Wenn nun die Speichereinrichtung defekt ist, kann es dazu kommen, daß die Auswerteeinrichtung die den Auslösemitteln zugeführte Energie fehlerhaft bemißt und den Zündvorgang beendet, bevor die zur Aktivierung der Auslösemittel erforderliche Energie zugeführt worden ist und bevor bei angeschlossener Betriebsspannungsquelle 17 diese Energie liefert. Diese nachteilige Folge wird durch das erfindungsgemäße Verfahren vermieden, das im folgenden anhand des Ablaufdiagramms in Figur 1 erläutert wird. Im Verfahrensschritt 100 wird der Zustand der Speichereinrichtung C12 überwacht, beispielsweise durch Messung der Spannung V. In einem anschließenden Verfahrensschritt 101 wird überprüft, ob die Sicherheitseinrichtung 1 aufgrund eines entsprechenden Signals des Sensors S1 aktiviert worden ist. Sofern das nicht der Fall ist, wird erneut der Verfahrensschritt 100 durchgeführt. Sobald festgestellt wird, daß die Sicherheitseinrichtung aktiviert worden ist (Verfahrensschritt 101), wird erneut im Verfahrensschritt 102 überprüft, ob die Speichereinrichtung C12 einwandfrei funktioniert. Wenn das der Fall ist, wird beispielsweise über das geschlossene Schaltelement 11a dem Auslösemittel 14a Energie aus der Speichereinrichtung C12 zugeführt. Zum Zeitpunkt des Schließens des Schaltelementes 11a, dieser Zeitpunkt entspricht dem Zeitpunkt t1 im Diagramm nach Figur 3, befindet sich die Speichereinrichtung C12 auf dem Potential V1. Der Stromfluß über das geschlossene Schaltelement 11a durch das Auslösemittel 14a führt zu einem Absinken des Potentials V an der Speichereinrichtung C12, so daß zum Zeitpunkt t2 das Potential V2 erreicht wird. Der zuvor beschriebene Vorgang entspricht dem Verfahrensschritt 103 in Figur 1. Gemäß Verfahrensschritt 104 prüft die Auswerteeinrichtung 10 ständig, ob dem Auslösemittel 14a eine hinreichend große Energiemenge zugeführt worden ist. Sofern das nicht der Fall ist, wird der Verfahrensschritt 103 fortgesetzt. Sobald jedoch die Auswerteeinrichtung 10 feststellt, daß dem Auslösemittel 14a eine hinreichend große Energiemenge zugeführt worden ist, wird das Auslösemittel 14a durch Öffnen des Schaltelementes 11a gemäß Verfahrensschritt 105 von der Speichereinrichtung für elektrische Energie C12 wieder abgetrennt. Dies ist gemäß Diagramm in Figur 3 zum Zeitpunkt t2 der Fall, in dem das Potential der Speichereinrichtung C12 den Wert V2 erreicht hat. Für das Folgende wird angenommen, daß nach ordnungsgemäßer Aktivierung des Auslösemittels 14a im Verfahrensschritt 102 des Ablaufdiagramms von Figur 1 ein Versagen der Speichereinrichtung C12 festgestellt wird, wobei die Auslösemittel 14b und 14c noch nicht aktiviert worden sind. In diesem Fall trennt die Auswerteeinrichtung 10 die Speichereinrichtung C12 durch Öffnen des Schaltelementes 20 ab oder automatisch durch Dioden D24, D25, so daß lediglich die Betriebsspannungsquelle 17, nämlich die Fahrzeugbatterie, als Energieversorgung für die Auslösemittel 14b, 14c zur Verfügung steht. Zum Zeitpunkt t3 (Figur 4) steuert die Auswerteeinrichtung 10 das Schaltelement 11d an und schließt damit einen das Auslösemittel 14b umfassenden Stromkreis. wodurch das Auslösemittel 14b aktiviert wird. Gemäß Verfahrensschritt 106 nach Figur 1 erhält somit das Auslösemittel 14b Strom aus der Betriebsspannungsquelle 17. Die besteuerung des Schaltelementes 11b erfolgt über ein Zeitglied 19b, das das Schaltelement 11b für eine vorgebbare Zeit geschlossen hält. Gemäß dem Diagramm von Figur 4 ersteke sich dieser vorgebbare Zeitraum über das Zeitintervall t3 bis t4. Gemäß Verfahrensschritt 107 überprüft dabei die Auswerteeinrichtung 10 ständig, ob das vorgegebene Zeitintervall bereits abgelaufen ist. Solange der vorgegebene Zeitraum noch nicht verstrichen ist, läuft der Verfahrensschritt 106 ab, d.h., dem Auslösemittel 14b wird ständig Energie aus der Betriebsspannungsquelle 17 zugeführt, die ein Potential V17 aufweist. Sobald jedoch die Auswerteeinrichtung 10 feststellt, daß die Grenze des vorgegebenen Zeitintervalls, also der Zeitpunkt $t_4$ in Figur 4 erreicht ist. wird das Schaltelement 11b erneut angesteuert und dadurch gemäß Verfahrensschritt 108 das Auslösemittel 14b von der Betriebsspannungsquelle 17 abgetrennt. Durch die vorstehend beschriebenen Maßnahmen wird erreicht, daß durch die Kontrolle der Zeitdauer der Aktivierung des Auslösemittels 14b diesem auch bei defektem Zustand der Speichereinrichtung C12 immer eine hinreichende Energiemenge zugeführt wird, solange die Betriebsspannungsquelle 17 angeschlossen ist. In gleicher Weise wird zum Zeitpunkt t5 durch Ansteuerung des Schaltelementes 11c das Auslösemittel 14c aktiviert. Diesem Auslösemittel 14c wird gemäß Figur 4 im Zeitintervall von t5 bis t6 Energie zugeführt.

In vorteilhafter Ausgestaltung des erfindungsgemäßen Verfahrens können die Zeitintervalle zur Ansteuerung der Auslösemittel 14a, 14b, 14c auch variabel vorgegeben werden, um unterschiedlichen Auslösemitteln unterschiedliche Energiemengen zuzuführen.

In weiterer vorteilhafter Ausgestaltung der Erfindung können bei der Bmessung der Energiezufuhr Umweltbedingungen, insbesondere die Umgebungstemperatur, berücksichtigt werden. Dadurch kann beispielsweise die Temperaturabhängigkeit der als Speichereinrichtung C12 verwendeten Kapazität berücksichtigt werden. Zur Erfassung der Umgebungstemperatur ist gemäß Blockschaltbild nach Figur 2 ein Temperatursensor 21 mit der Auswerteeinrichtung 10 verbunden. Dieser Temperatursensor 21 wandelt beispielsweise die erfaßte Umgebungstemperatur in einen temperaturproportionalen Spannungswert um, der von der Auswerteeinrichtung 10 leicht verarbeitet werden kann.

## Patentansprüche

1. Verfahren zum Betrieb einer Sicherheitseinrichtung für Fahrzeuginsassen mit einer zusätzlich zur Fahrzeugbatterie (17) vorgesehenen Speichereinrichtung (C12) für elektrische Energie sowie mit durch Energie-zufuhr aktivierbaren Auslösemitteln (14a, 14b, 14c) für Rückhaltemittel, wie Luftsack, Gurtstraffer oder dergleichen, dadurch gekennzeichnet, daß der Zustand der Speichereinrichtung (C12) überprüft wird und daß bei Feststellung eines Defektes an der Speichereinrichtung diese durch Schaltmittel (20) abgetrennt wird, und daß die Aulösemittel (14a, 14b, 14c) zu ihrer Aktivierung eine vorgebbare Zeitdauer mit der Betriebsspannungsquelle (17) (Fahrzeugbatterie) verbunden werden.

2. Verfahren nach Anspruch 1, dadurch gekennzeichnet, daß die vorgebbare Zeitdauer für alle Auslösemittel (14a, 14b, 14c) gleich lang bemessen wird.

3. Verfahren nach Anspruch 1, dadurch gekennzeichnet, daß die vorgebbare Zeitdauer variabel bemessen wird.

4. Verfahren nach einem der Ansprüche 1 und 3, dadurch gekennzeichnet, daß die Zeitdauer des Anschlusses der Auslösemittel (14a, 14b, 14c) an die Betriebsspannungsquelle (17) abhängig von Umweltbedingungen, insbesondere von der Umgebungstemperatur, veränderbar ist.

5. Einrichtung zur Durchführung des Verfahrens nach einem der Ansprüche 1 bis 3, gekennzeichnet durch eine Betriebsspannungsquelle (17), eine parallel zur Betriebsspannungsquelle (17) geschaltete Speichereinrichtung für elektrische Energie (C12). Auslösemittel (14a, 14b, 14c) zur Auslösung von Rückhaltemitteln (18), die mittels Schaltelementen (11a, 11b, 11c) mit der Betriebsspannungsquelle (17) bzw. der Speichereinrichtung für elektrische Energie (C12) verbindbar sind, eine Auswerteeinrichtung (10) zur Auswertung des Ausgangssignales eines beschleunigungsempfindlichen Sensors (S1) und zur besteuerung der Schaltelemente (11a, 11b, 11c), zwischen die Auswerteeinrichtung (10) und die Schaltelemente (11a, 11b, 11c) geschaltete Zeitglieder (19a, 19b, 19c), sowie ein von der Auswerteeinrichtung (10) ansteuerbares Schaltelement (20) oder Dioden (D24, D25) zur Abtrennung der Speichereinrichtung (C12).

6. Einrichtung nach Anspruch 5, dadurch gekennzeichnet, daß zur Erfassung der Umgebungstemperatur ein mit der Auswerteeinrichtung (10) verbundener Sensor (21) vorgesehen ist.

## Claims

1. Process for operating a safety device for vehicle occupants, having a storage device (C12) for electrical energy provided in addition to the vehicle battery (17), and having trigger means (14a, 14b, 14c) for restraining means, such as an airbag, safety belt retractor or the like, which trigger means can be activated by the supply of energy, characterised in that the state of the storage device (C12) is tested, and in that if a defect is detected in the storage device, the latter is disconnected by switching means (20), and in that the trigger means (14a, 14b, 14c) are connected to the operating voltage source (17) (vehicle battery) for a predeterminable period in order to be activated.

2. Process according to Claim 1, characterised in that the predeterminable period is dimensioned to be equally long for all trigger means (14a, 14b, 14c).

3. Process according to Claim 1, characterised in that the predeterminable period is dimensioned to be variable.

4. Process according to one of Claims 1 and 3, characterised in that the period of connection of the trigger means (14a, 14b, 14c) to the operating voltage source (17) can be altered as a function of environmental conditions, in particular of the ambient temperature.

5. Device for carrying out the process according to one of Claims 1 to 3, characterised by an operating voltage source (17), a storage device for electrical energy (C12) connected in parallel to the operating voltage source (17), trigger means (14a, 14b, 14c) for triggering restraining means (18), which can be connected to the operating voltage source (17) and to the storage device for electrical energy (C12), respectively, by means of switching elements (11a, 11b, 11c), an evaluation device (10) for evaluating the output signal of an acceleration-sensitive sensor (S1) and, for driving the switching elements (11a, 11b, 11c), timing elements (19a, 19b, 19c) connected between the evaluation device (10) and the switching elements (11a, 11b, 11c), and a switching element (20), which can be driven by the evaluation device (10), or diodes (D24, D25) for disconnecting the storage device (C12).

6. Device according to Claim 5, characterised in that a sensor (21) connected to the evaluation device (10) is provided for detecting the ambient temperature.

## Revendications

1. Procédé d'actionnement d'un dispositif de sécurité pour passagers de véhicules, avec un dispositif accumulateur (C12) d'énergie électrique prévu en supplément de la batterie (17) du véhicule, ainsi qu'avec des moyens de déclenchement (14a, 14b, 14c), susceptibles d'être activés par un apport d'énergie, pour des moyens de retenue, tels qu'un sac à air, un tendeur de ceinture, ou des moyens analogues, procédé caractérisé en ce que l'état du dispositif accumulateur (C12) est vérifié et en ce que lorsqu'un défaut est constaté sur le dispositif accumulateur, celui-ci est déconnecté par un moyen de commutation (20) et en ce que les moyens de déclenchement (14a, 14b, 14c) sont reliés pour leur activation, pendant une période de temps susceptible d'être prédéfinie, à la source de tension de fonctionnement (17) (batterie du véhicule).

2. Procédé selon la revendication 1, caractérisé en ce que la période de temps susceptible d'être prédéfinie a la même durée pour tous les moyens de déclenchement (14a, 14b, 14c).

3. Procédé selon la revendication 1, caractérisé en ce que la période de temps susceptible d'être prédéfinie est variable.

4. Procédé selon une des revendications 1 ou 3, caractérisé en ce que la période de temps du raccordement des moyens de déclenchement (14a, 14b, 14c) à la source de tension de fonctionnement (17) est susceptible d'être modifiée en fonction des conditions environnantes, notamment de la température environnante.

5. Dispositif pour la mise en oeuvre du procédé selon une des revendications 1 à 3, caractérisé en ce qu'il comporte une source de tension de fonctionnement (17), un dispositif accumulateur d'énergie électrique (C12) branché en parallèle sur la source de tension de fonctionnement (17), des moyens de déclenchement (14a, 14b, 14c) permettant de déclencher des moyens de retenue (18), et qui sont susceptibles d'être reliés par des éléments de commutation (11a, 11b, 11c) à la source de tension de fonctionnement (17) ou bien au dispositif accumulateur d'énergie électrique (C12), un dispositif d'exploitation (10) pour exploiter le signal de sortie d'un détecteur (S1) sensible à l'accélération et pour commander les éléments de commutation (11a, 11b, 11c), des organes de temporisation (19a, 19b, 19c) branchés entre le dispositif d'exploitation (10) et les éléments de commutation (11a, 11b, 11c), ainsi qu'un élément de commutation (20) susceptible d'être commandé par le dispositif d'exploitation (10) ou bien des diodes (D24, D25), pour permettre la séparation du dispositif accumulateur (C12).

6. Dispositif selon la revendication 5, caractérisé en ce que pour la détection de la température environnante, il est prévu un détecteur (21) relié au dispositif d'exploitation (10).

## FIG. 1

KONTROLLE DER ENERGIERESERVE — 100

NEIN

SICHERHEITSEIN-RICHTUNG AKTIVIERT — 101

JA

ENERGIERESERVE IN ORDNUNG — 102

NEIN — JA — NEIN — NEIN

AUSLÖSEMITTEL ERHÄLT STROM AUS ENERGIERESERVE — 103

AUSLÖSEMITTEL ERHÄLT STROM AUS FAHRZEUGBATTERIE — 106

ENERGIEGRENZ-WERT ERREICHT — 104

ZEITGRENZWERT ERREICHT — 107

JA — JA

AUSLÖSEMITTEL WIRD VON ENERGIERESERVE ABGETRENNT — 105

AUSLÖSEMITTEL WIRD VON BATTERIE ABGETRENNT — 108

# FIG. 2

## FIG. 3

## FIG. 4